# EUROPÄISCHE PATENTANMELDUNG

(11) **EP 3 216 747 A1**
(43) Veröffentlichungstag der Anmeldung: **13.09.2017**
(21) Anmeldenummer: 16159026.0
(22) Anmeldetag: 07.03.2016
(51) Int. Cl.: B66F 9/075, B66F 9/06, B62B 3/06

(54) **FAHRERLOSES TRANSPORTFAHRZEUG**

(71) Anmelder: Melkus Mechatronic GmbH, 5112 Lamprechtshausen (AT)
(72) Erfinder: Melkus, Andreas, 5112 Lamprechtshausen (AT)
(74) Vertreter: Sonn & Partner Patentanwälte

(57) **Zusammenfassung**

Fahrerloses Transportfahrzeug (1) zum Fördern eines Ladungsträgers mit
- einem Fahrwerk (2);
- einer mit dem Fahrwerk (2) verbundenen Lastaufnahmeeinheit (11);
- einer Hubeinheit (15) zum Anheben der Lastaufnahmeeinheit (11) relativ zu dem Fahrwerk (11),
dadurch gekennzeichnet, dass
- das Fahrwerk (2) zwei einzelne Fahrwerkeinheiten (3) mit jeweils zumindest einer Radeinheit (4) aufweist, wobei die Fahrwerkeinheiten (3) über die Lastaufnahmeeinheit (11) miteinander verbunden sind.

## Beschreibung

Die Erfindung betrifft ein fahrerloses Transportfahrzeug zum Fördern eines Ladungsträgers.

Fahrerlose Transportfahrzeuge (FTF, engl. "Automated Guided Vehicle", AGV) sind flurgebundene Fördermittel, welche dem Materialtransport dienen. Solche FTFs können in einem fahrerlosen Transportsystem (FTS) eingesetzt werden, welches üblicherweise ein oder mehrere fahrerlose Transportfahrzeuge, eine Leitsteuerung, Einrichtungen zur Standortbestimmung und Lageerfassung, Einrichtungen zur Datenübertragung aufweist.

Solche fahrerlosen Transportfahrzeuge als Bestandteile eines fahrerlosen Transportsystems sind seit vielen Jahren in verschiedenen Ausführungsformen bekannt.

Aus dem EP 2 336 075 B1 ist eine Transporteinrichtung zum automatischen Aufnehmen und Abgeben einer Palette und zum Verfahren der Palette bekannt geworden. Die Transporteinrichtung weist ein im Wesentlichen ein U-förmiges Fahrgestell auf, auf welchem eine Hubgabel vertikal bewegbar angeordnet ist. Im Bereich der Ecken des Fahrgestells ist jeweils eine Radeinheit angeordnet, wobei jede Radeinheit um eine vertikale Achse verdreht werden kann. Die Radeinheiten sind jeweils auf den Schenkeln des offenen Fahrgestells angeordnet. Dabei sind jeweils die im Bereich der Spitzen der Hubgabel angeordneten vorderen Radeinheiten durch eine erste Kopplungseinrichtung und die den Spitzen der Hubgabel abgewandten hinteren Radeinheiten durch eine zweite Kopplungseinrichtung miteinander gekoppelt. Die Betätigung der Kopplungseinrichtung erfolgt durch eine Lenkeinrichtung. Jede der Radeinheiten ist über eine eigene Antriebseinheit antreibbar. Dabei besteht jede Radeinheit aus einem ersten Laufrad und einem zweiten Laufrad, wobei jeweils nur eines der beiden Laufräder durch die beispielsweise durch einen bürstenlosen Elektromotor gebildete Antriebseinheit angetrieben wird. Weiters kann vorgesehen sein, dass das andere Laufrad gebremst oder durch einen weiteren bürstenlosen Elektromotor angetrieben wird. Durch koordinierte Ansteuerung der beiden Elektromotoren durch eine elektronische Steuereinheit lässt sich die Radeinheit am Stand um die vertikale Achse drehen und somit die Bewegungsrichtung der Transporteinrichtung steuern und beliebig ändern.

Nachteilig an der bekannten Ausführung ist jedoch, dass das U-förmige Fahrgestell der Transporteinrichtung anfällig für Verwindungen ist. In vielen Arbeitsumgebungen kann nicht sichergestellt werden, dass der Boden exakt eben ist. Die Bodenunebenheiten führen bei der bekannten Transporteinrichtung dazu, dass das U-förmige Fahrgestell einseitig angehoben bzw. abgesenkt wird, wodurch das U-förmige Fahrgestell insgesamt Verwindungen ausgesetzt wird. Dasselbe Problem kann bei kleineren Hindernissen, wie Schrauben oder Dichtungen, auftreten, welche eine Änderung des Fahrweges nicht rechtfertigen würden. Die ungleiche Belastung der beiden Schenkel des U-förmigen Fahrgestells kann die Stabilität der Transporteinrichtung beeinträchtigen bzw. müssen solche Belastungen bereits in der Ausführung des Fahrgestells berücksichtigt werden.

Die Aufgabe der vorliegenden Erfindung besteht deshalb darin, die Nachteile des Standes der Technik zu beseitigen bzw. zumindest zu lindern. Die Erfindung setzt sich daher insbesondere zum Ziel, ein fahrerloses Transportfahrzeug zu schaffen, dessen Fahrgestell besser mit Bodenunebenheiten oder überrollbaren Hindernissen umgehen kann.

Diese Aufgabe wird durch ein fahrerloses Transportfahrzeug mit den Merkmalen von Anspruch 1 gelöst. Bevorzugte Ausführungsformen sind in den abhängigen Ansprüchen angegeben.

Erfindungsgemäß weist das fahrerlose Transportfahrzeug zumindest auf:
- ein Fahrwerk;
- eine mit dem Fahrwerk verbundenen Lastaufnahmeeinheit;
- eine Hubeinheit zum Anheben der Lastaufnahmeeinheit relativ zu dem Fahrwerk, wobei
- das Fahrwerk zwei einzelne Fahrwerkeinheiten mit jeweils zumindest einer Radeinheit aufweist, wobei die Fahrwerkeinheiten über die Lastaufnahmeeinheit miteinander verbunden sind.

Die einzelnen Fahrwerkeinheiten des Fahrwerks sind über die Lastaufnahmeeinheit derart miteinander verbunden, dass die eine Fahrwerkeinheit zumindest bezüglich eines Freiheitsgrades der Bewegung unabhängig von der anderen Fahrwerkeinheit relativ zur Lastaufnahmeeinheit beweglich ist. In einer Ausführungsform bedeutet dies, dass die eine Fahrwerkeinheit gegenüber der Lastaufnahmeeinheit verkippt werden kann, ohne dass die andere Fahrwerkeinheit die Kippbewegung zwangsläufig mitmacht. In einer weiteren Ausführungsform kann die Höhenposition der einen Fahrwerkeinheit relativ zur Lastaufnahmeeinheit angepasst werden, ohne die Höhenposition der anderen Fahrwerkeinheit zu verändern. Gemäß einer besonders bevorzugten Ausführungsform ist das fahrerlose Transportfahrzeug frei von jeglichen mechanischen Verbindungen direkt zwischen den Fahrwerkeinheiten, so dass die Fahrwerkeinheiten ausschließlich über die Lastaufnahmeeinheit miteinander verbunden sind. Indem die Fahrwerkeinheiten mechanisch nicht miteinander verbunden sind, kann vorteilhafterweise eine größtmögliche Entkoppelung der Fahrwerkeinheiten voneinander erreicht werden. Dadurch können die Belastungen der Fahrwerkeinheiten reduziert werden, wodurch eine besonders langlebige Ausführung erzielt wird.

Bevorzugt sind die Fahrwerkeinheiten langgestreckt, wobei die Längsachsen der Fahrwerkeinheiten im Wesentlichen parallel zueinander angeordnet sind.

Zum Ausgleich von Bodenunebenheiten entlang der Fahrstrecke des fahrerlosen Transportfahrzeugs ist es günstig, wenn Lagereinrichtungen zwischen den Fahrwerkeinheiten und der Lastaufnahmeeinheit derart angeordnet sind, dass die Fahrwerkeinheiten jeweils relativ zu der Lastaufnahmeeinheit beweglich sind. Bei dieser Ausführungsform sind die Lagereinrichtungen einerseits mit der Fahrwerkeinheit und andererseits mit der Lastaufnahmeeinheit verbunden. Die Lagereinrichtungen ermöglichen jeweils zumindest einen Freiheitsgrad der Bewegung der jeweiligen Fahrwerkeinheit gegenüber der Lastaufnahmeeinheit. Dadurch kann das Fahrwerk bezüglich des zumindest einen Freiheitsgrades von der Lastaufnahmeeinheit und dem damit transportierten Ladungsträger entkoppelt werden. Zu diesem Zweck sind die Fahrwerkeinheiten einzeln, d.h. unabhängig voneinander, gegenüber der Lastaufnahmeeinheit beweglich. Deshalb kann die Lastaufnahmeeinheit beispielsweise in einer horizontalen Stellung gehalten werden, wenn eine Bodenunebenheit oder ein überrollbares Hindernis, etwa eine Schraube, auf der Wegstrecke einer der beiden Fahrwerkeinheiten auftritt. Somit kann ein einseitiger Niveauausgleich des Fahrwerks erfolgen. Dadurch können die Belastungen des Transportfahrzeugs im Dauerbetrieb reduziert werden. Somit wird ein besonders langlebiges Transportfahrzeug mit geringem Wartungs- und Reparaturaufwand bereitgestellt.

Unabhängig von den Lagereinrichtungen zum Niveauausgleich der Fahrwerkeinheiten gegenüber der Lastaufnahmeeinheit können die Radeinheiten selbst mittels beweglicher Lagerungen an den Fahrwerkgehäusen der Fahrwerkeinheiten gelagert sein. Vorzugsweise sind zwei Radeinheiten pro Fahrwerkgehäuse vorgesehen, wobei die Radeinheiten in Richtung der Längsachse des Fahrwerkgehäuses voneinander beabstandet sind. In einer bevorzugten Ausführung weisen die Radeinheiten jeweils zwei Bodenrollen bzw. Laufräder zum Abrollen auf dem Untergrund auf. Die Radeinheiten sind vorzugsweise jeweils um eine in einer Ausgangsstellung im Wesentlichen vertikale Drehachse drehbar an den Fahrwerkgehäusen der Fahrwerkeinheiten gelagert. Bevorzugt sind die Lagerungen der Radeinheiten dazu ausgebildet, eine Verkippung der Drehachsen der Radeinheiten bezüglich der Fahrwerkeinheit freizugeben. Somit kann eine Schrägstellung der Radeinheiten bezüglich der Fahrwerkgehäuse ermöglicht werden. Zu diesem Zweck können die Lagerungen Kippgelenke aufweisen, mit denen die Radeinheiten an den Fahrwerkgehäusen montiert sind.

Bei Verwendung von langgestreckten Fahrwerkeinheiten, beispielsweise von in Draufsicht im Wesentlichen rechteckigen Fahrwerkeinheiten, weisen die Fahrwerkeinheiten eine Längserstreckungsrichtung bzw. Längsachse und eine Quererstreckungsrichtung bzw. Querachse auf, welche zusammen die Hauptebenen der Fahrwerkeinheiten definieren.

Gemäß einer besonders bevorzugten Ausführungsform sind die Lagereinrichtungen zwischen den Fahrwerkeinheiten und der Lastaufnahmeeinheit derart angeordnet, dass die Fahrwerkeinheiten jeweils um im Wesentlichen in Längsrichtung der Fahrwerkeinheiten verlaufende Längsachsen relativ zu der Lastaufnahmeeinheit verkippbar sind. Dadurch können beispielsweise in der Fahrbahn ausgebildete Längsrillen entlang des Fahrweges einer der Fahrwerkeinheiten ausgeglichen werden. Vorteilhafterweise können so Verwindungen des fahrerlosen Transportfahrzeugs reduziert bzw. vermieden werden. In einer Normal- bzw. Mittelstellung ist die Hauptebene der Fahrwerkeinheit im Wesentlichen horizontal angeordnet. Aus der Normalstellung kann die Fahrwerkeinheit um deren Längsachse in beide Richtungen bis zu einem maximalen Kippwinkel von zumindest 1 Grad, vorzugsweise zumindest 2 Grad, beispielsweise im Wesentlichen 3°, in eine verkippte Stellung gekippt werden.

Für die Zwecke dieser Offenbarung beziehen sich die Orts- und Richtungsangaben, wie "oben", "unten", "horizontal", "vertikal", auf den bestimmungsgemäßen Betriebszustand des fahrerlosen Transportfahrzeugs, wenn das Transportfahrzeug auf einer horizontalen Fahrbahn bewegt wird.

Gemäß einer weiteren besonders bevorzugten Ausführungsform sind die Lagereinrichtungen zwischen den Fahrwerkeinheiten und der Lastaufnahmeeinheit derart angeordnet, dass die Fahrwerkeinheiten jeweils um im Wesentlichen senkrecht zu den Längsachsen verlaufende Querachsen der Fahrwerkeinheiten relativ zu der Lastaufnahmeeinheit verkippbar sind. Dadurch kann beispielsweise ein abschüssiger oder ansteigender Bereich entlang des Fahrwegs einer der Fahrwerkeinheiten ausgeglichen werden. In einer Normal- bzw. Mittelstellung ist die Hauptebene der Fahrwerkeinheit im Wesentlichen horizontal angeordnet. Aus der Normalstellung kann die Fahrwerkeinheit um deren Querachse in beide Richtungen bis zu einem maximalen Kippwinkel von zumindest 1 Grad, vorzugsweise zumindest 2 Grad, beispielsweise im Wesentlichen 3°, in eine verkippte Stellung gekippt werden.

Gemäß einer weiteren besonders bevorzugten Ausführungsform sind die Lagereinrichtungen zwischen den Fahrwerkeinheiten und der Lastaufnahmeeinheit derart angeordnet, dass die Fahrwerkeinheiten jeweils gleichzeitig um die Längsachsen und die Querachsen relativ zu der Lastaufnahmeeinheit verkippbar sind.

Vorteilhafterweise kann eine schwimmende Lagerung der Lastaufnahmeeinheit an den Fahrwerkeinheiten erzielt werden, wenn die Fahrwerkeinheiten jeweils um deren Längs- und Querachse aus der Normalstellung kippbar sind. Demnach können die Kippbewegungen in die verschiedenen Richtungen einander überlagert sein, so dass die Lastaufnahmeeinheit schwimmend auf den Fahrwerkeinheiten gelagert ist. Diese Ausführungsform ist dahingehend besonders vorteilhaft, dass Verwindungen des fahrerlosen Transportfahrzeugs durch einseitig auftretende Fahrbahnunebenheiten und überrollbare Hindernisse weitgehend vermieden werden können, indem ständig ein Niveauausgleich der Fahrwerkeinheiten gegenüber der Lastaufnahmeeinheit vorgenommen werden kann.

Um die Beweglichkeit der jeweiligen Fahrwerkeinheit gegenüber der Lastaufnahmeeinheit zu ermöglichen, ist es günstig, wenn die Lagereinrichtung ein vorzugsweise in alle Richtungen verkippbar an der Fahrwerkeinheit oder an der Lastaufnahmeeinheit gelagertes Lagerelement aufweist. Bevorzugt ist das Lagerelement einerseits relativ zu dem Fahrwerkgehäuse verkippbar an der Fahrwerkeinheit gelagert, wobei das Lagerelement andererseits fest bzw. unbeweglich mit der Lastaufnahmeeinheit verbunden ist. Vorzugsweise ist das Lagerelement in einer Normalstellung im Wesentlichen senkrecht zur Hauptebene des Fahrwerkgehäuses angeordnet. Bei Auftreten einer Bodenunebenheit oder eines überrollbaren Hindernisses wird die betroffene Fahrwerkeinheit mittels des jeweiligen Lagerelements relativ zu der Lastaufnahmeeinheit bewegt, wobei das Lagerelement von der Normalstellung in eine dazu verkippte Stellung gelangt.

Um die Beweglichkeit des Lagerelements zwecks Niveauausgleichs der Fahrwerkeinheit zu ermöglichen, ist es günstig, wenn die Fahrwerkeinheit oder die Lastaufnahmeeinheit eine Lageröffnung aufweist, in welcher das Lagerelement mit einem allseitigen Spiel aufgenommen ist.

Um die Fahrwerkeinheit selbständig zurück in die Ausgangsstellung zu bringen, ist das Lagerelement bevorzugt mit einem Federelement verbunden, welches die Lastaufnahmeeinheit in Richtung zur Fahrwerkeinheit hin vorspannt. Die Hubeinheit ist bevorzugt dazu eingerichtet, die Lastaufnahmeeinheit gegen die Kraft des Federelementes von einer abgesenkten Stellung, welche zum Unterfahren eines Ladungsträgers eingerichtet ist, und einer angehobenen Transportstellung zu überführen. Darüber hinaus ist das Federelement dazu ausgebildet, die Lastaufnahmeeinheit in eine Normalstellung bezüglich der Fahrwerkeinheit rückzuführen, wenn die Fahrwerkeinheit um deren Längs- bzw. Querachse relativ zur Lastaufnahmeeinheit bewegt wird.

Zur beweglichen Lagerung der Lastaufnahmeeinheit an den Fahrwerkeinheiten ist es günstig, wenn jeweils zumindest zwei Lagereinrichtungen zwischen jeder Fahrwerkeinheit und der Lastaufnahmeeinheit vorgesehen sind, wobei die einen Lagereinrichtungen vorzugsweise an den einen Enden der Fahrwerkeinheiten und die anderen Lagereinrichtungen vorzugsweise an den anderen Enden der Fahrwerkeinheiten angeordnet sind. Vorzugsweise sind jeweils zwei in Richtung der Querachse voneinander beabstandete Lagereinrichtungen an jedem Endbereich jeder Fahrwerkeinheit vorgesehen.

In einer bevorzugten Ausführungsform weist die Lastaufnahmeeinheit entlang der Fahrwerkeinheiten erstreckte Längsabschnitte und einen die Längsabschnitte miteinander verbindenden Querabschnitt auf. Bevorzugt sind die Längsabschnitte der Lastaufnahmeeinheit mittels der zuvor beschriebenen Lagereinrichtungen an den Fahrwerkeinheiten gelagert. Die Längsabschnitte sind über zumindest einen Querabschnitt miteinander verbunden, welcher sich vorzugsweise im Wesentlichen senkrecht zu den Längsachsen der Fahrwerkeinheiten erstreckt. Bevorzugt weist der Querabschnitt eine kürzere Erstreckung in Längsrichtung der Fahrwerkeinheiten als die Längsabschnitte auf. Wenn der Querabschnitt zudem mit den einen Enden der Fahrwerkeinheiten verbunden ist, ist die Lastaufnahmeeinheit in Draufsicht im Wesentlichen U-förmig ausgebildet. Diese Ausführung eignet sich insbesondere dazu, Ladungsträger in Form von Paletten zu unterfahren und durch Betätigung der Hubeinheit vom Untergrund abzuheben.

Zum Anheben der Lastaufnahmeeinheit ist es günstig, wenn die Hubeinheit jeweils zumindest ein Hubelement, insbesondere einen Linearantrieb, vorzugsweise einen hydraulischen Zylinder-Kolben-Antrieb, zwischen jeder Fahrwerkseinheit und der Lastaufnahmeeinheit aufweist, wobei vorzugsweise jeweils zumindest zwei in Richtung der Längsachsen der Fahrwerkeinheiten voneinander beabstandete Hubelemente pro Fahrwerkeinheit vorgesehen sind. Die Hubelemente greifen bei dieser Ausführungsform an der Innenseite der Lastaufnahmeeinheit an, um diese von einer abgesenkten Stellung, beispielsweise zum Unterfahren des Ladungsträgers, in eine angehobene Stellung, insbesondere zum Transport des Ladungsträgers, zu bringen. Vorzugsweise sind an jeder Fahrwerkeinheit zwei Paare von in Richtung der Querachse beabstandeten Hubelementen angeordnet.

In einer bevorzugten Ausführungsform sind die Hubelemente der Hubeinheit unabhängig voneinander betätigbar, so dass die einzelnen Fahrwerkeinheiten in unterschiedlichen Höhenpositionen relativ zu der Lastaufnahmeeinheit anordenbar sind. Vorteilhafterweise kann die Lastaufnahmeeinheit bei dieser Ausführung selbst dann in einer horizontalen Lage angeordnet sein, wenn der Untergrund in Querrichtung einen stufenförmigen Verlauf aufweist.

Um Kollisionen im Betrieb des fahrerlosen Transportfahrzeugs zu verhindern, ist bevorzugt eine Sicherheitseinrichtung zur Erfassung eines Hindernisses entlang eines Fahrwegs des fahrerlosen Transportfahrzeugs vorgesehen. Solche Sicherheitseinrichtungen zur Hinderniserfassung sind im Stand der Technik an sich bekannt, so dass auf nähere Ausführungen hierzu verzichtet werden kann. Insbesondere kann die Einrichtung zur Erfassung von Hindernissen einen Laserscanner aufweisen. Alternativ kann die Einrichtung zur Erfassung von Hindernissen zur Auswertung der Laufzeit eines vom Hindernis zurückgeworfenen Messsignals, beispielsweise eines Ultraschallsignals, eingerichtet sein.
Es sind jedoch zahlreiche andere Verfahren zur Hinderniserkennung im Stand der Technik bekannt, so dass hierauf an dieser Stelle nicht näher einzugehen ist.

Aus Platzgründen ist es günstig, wenn die Sicherheitseinrichtung an dem Querabschnitt der Lastaufnahmeeinheit angeordnet ist. Im Stand der Technik wurden im Verbund fahrende, mechanisch getrennte Fahreinheiten vorgeschlagen, welche jeweils mit einer eigenen Hubeinrichtung ausgestattet sind (vgl. DE 10 2008014877 A1). Bei dieser Ausführung hat es sich jedoch als schwierig herausgestellt, die Sicherheitseinrichtung an den Fahreinheiten anzubringen, da zum Unterfahren der Ladungsträger eine maximale Bauhöhe nicht überschritten werden darf. Die vorliegende Ausführungsvariante löst dieses Problem dadurch, dass die Sicherheitseinrichtung an dem Querabschnitt angebracht wird, welcher im Betrieb nicht unter den Ladungsträger gelangen muss. Somit kann die Sicherheitseinrichtung an dem Querabschnitt an der Oberseite der Lastaufnahmeeinheit angeordnet sein und hiervon nach oben abstehen.

Das fahrerlose Transportfahrzeug weist ein Fahrwerk mit zumindest zwei Fahrwerkeinheiten auf. In manchen Ausführungen kann es günstig sein, wenn mehr als zwei Fahrwerkeinheiten vorgesehen sind. Die Fahrwerkeinheiten sind vorzugsweise parallel und jeweils in einem Abstand zueinander angeordnet.

An jeder Fahrwerkeinheit kann zumindest ein Antrieb vorgesehen ist, mittels welchem zumindest eine Bodenrolle der jeweiligen Radeinheit antreibbar ist. Vorzugsweise weist jede Radeinheit zwei Bodenrollen auf, welche mittels des Antriebssystems unabhängig voneinander antreibbar sind.
Die Erfindung wird nachstehend anhand eines in den Zeichnungen dargestellten Ausführungsbeispiels, auf das sie jedoch nicht beschränkt sein soll, weiter erläutert. In der Zeichnung zeigt:

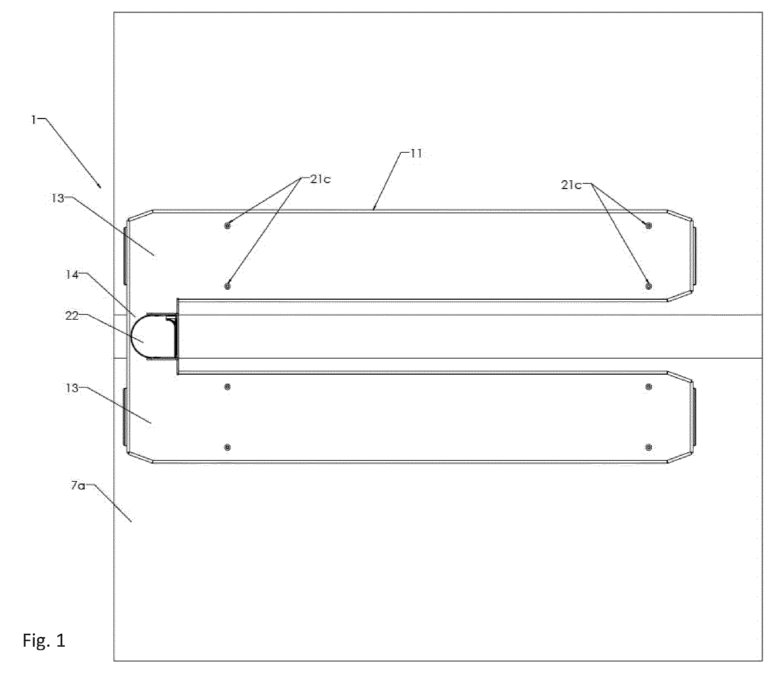

Fig. 1 ein erfindungsgemäßes fahrerloses Transportfahrzeug in Draufsicht, wobei das fahrerlose Transportfahrzeug ein Fahrwerk mit zwei unabhängig voneinander relativ zu einer Lastaufnahmeeinheit bewegliche Fahrwerkeinheiten mit jeweils zwei Radeinheiten aufweist;
Fig. 2 das fahrerlose Transportfahrzeug gemäß Fig. 1 in Unteransicht;
Fig. 3 das fahrerlose Transportfahrzeug gemäß Fig. 1, 2 in auseinandergezogener Ansicht;

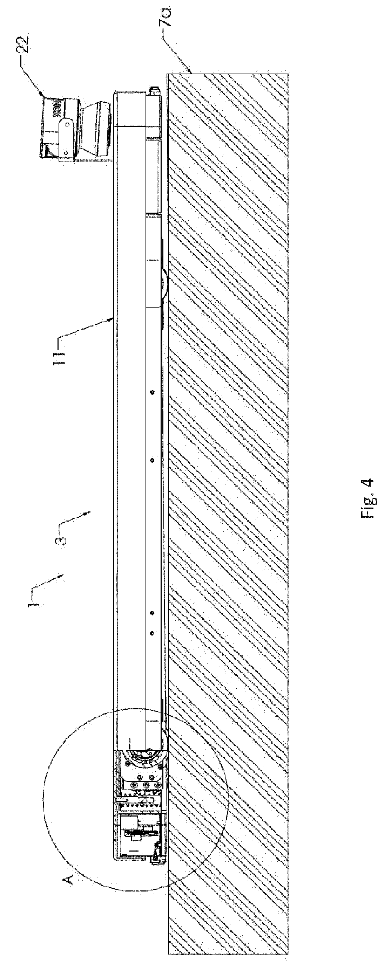

Fig. 4 eine teilweise geschnittene Seitenansicht des fahrerlosen Transportfahrzeugs gemäß Fig. 1 bis 3 auf einem ebenen Untergrund;
Fig. 5 eine Ansicht von Detail A gemäß Fig. 4 im Bereich einer Lagereinrichtung zwischen der Lastaufnahmeeinheit und der zugehörigen Fahrwerkeinheit;
Fig. 6 eine teilweise geschnittene Seitenansicht des fahrerlosen Transportfahrzeugs gemäß Fig. 1 bis 4, dessen in der Ansicht linke Fahrwerkeinheit über eine nach vorne hin abschüssige Fahrbahnvertiefung fährt; und

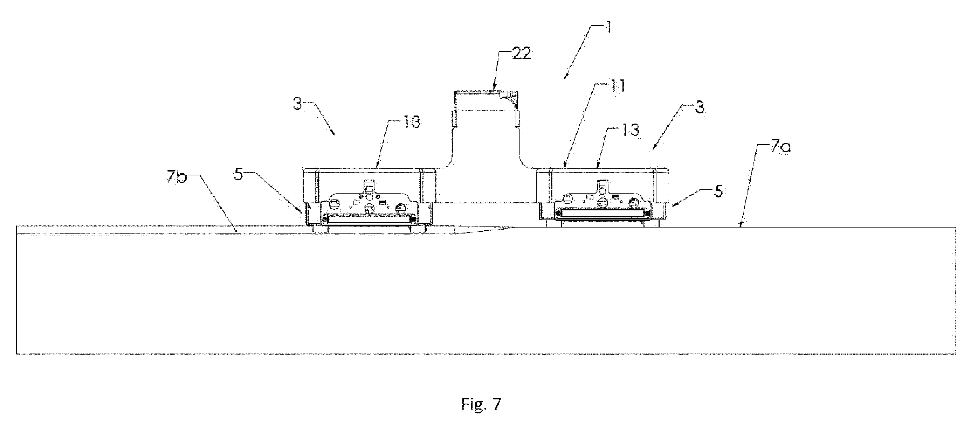

Fig. 7 eine Vorderansicht des fahrerlosen Transportfahrzeugs in der Stellung gemäß Fig. 6.

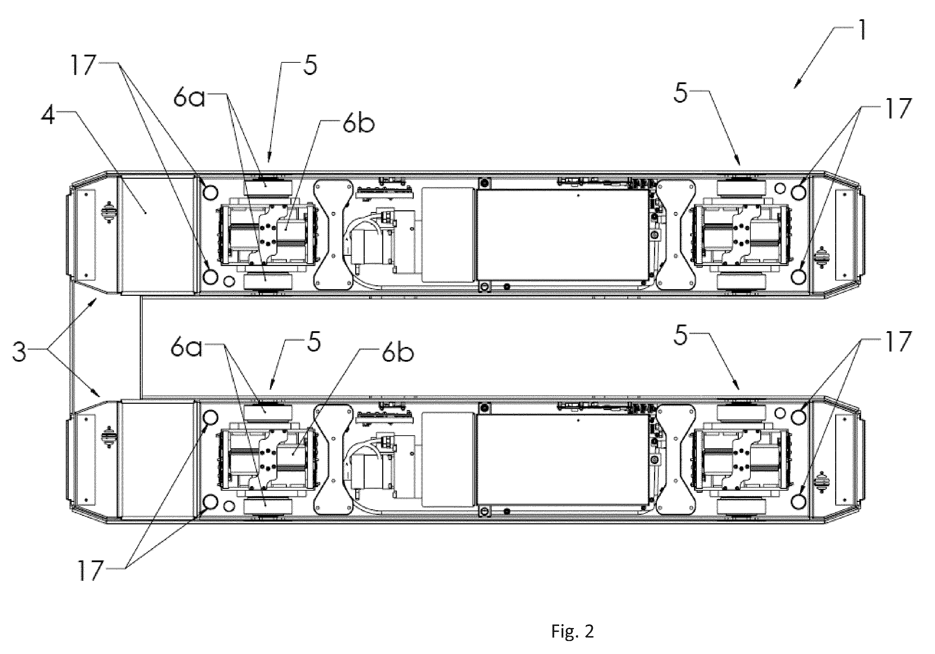

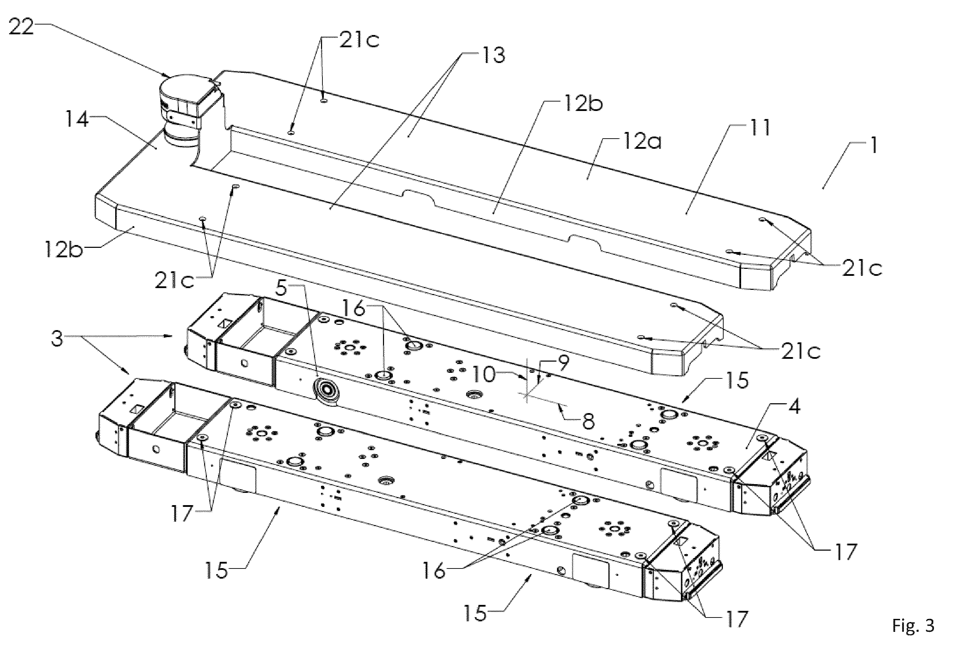

Die Zeichnung zeigt ein fahrerloses Transportfahrzeug 1 zum Fördern eines Ladungsträgers, insbesondere einer Palette. Das Transportfahrzeug 1 weist ein Fahrwerk bzw. -gestell 2 (vgl. Fig. 2) auf, welches in der gezeigten Ausführungsform durch zwei einzelne, mechanisch nicht miteinander verbundene Fahrwerkeinheiten 3 gebildet ist. Somit ist zwischen den Fahrwerkeinheiten 3 ein Freiraum ausgebildet, welcher sich über die gesamte Länge und Höhe der Fahrwerkeinheiten 3 erstreckt. Die Fahrwerkeinheiten 3 sind jeweils langgestreckt, in Draufsicht im Wesentlichen rechteckig. Die Fahrwerkeinheiten 3 weisen jeweils ein im Wesentlichen starres Fahrwerkgehäuse 4 auf, an dessen Unterseite jeweils zwei Radeinheiten 5 gelagert sind. Jede Radeinheit 5 weist in der gezeigten Ausführung genau zwei Bodenrollen 6a auf, welche auf einem Untergrund 7a abrollen können. Zumindest eine der Bodenrollen 6 jeder Radeinheit 5 ist mit einem geeigneten Antrieb 6b, insbesondere einem Elektroantrieb, verbunden. Das Fahrwerkgehäuse 4 weist eine Längsachse 8 und eine dazu senkrechte Querachse 9 auf, welche eine Hauptebene des Fahrwerkgehäuses 4 aufspannen. Weiters ist in Fig. 3 schematisch eine Vertikalachse 10 senkrecht zur Hauptebene des Fahrwerkgehäuses 4 eingezeichnet.

Das fahrerlose Transportfahrzeug 1 weist zudem eine gemeinsame Lastaufnahmeeinheit 11 für die zumindest zwei Fahrwerkeinheiten 3 auf, wobei die Lastaufnahmeeinheit 11 die einzige mechanische Verbindung zwischen den Fahrwerkeinheiten 3 darstellt. Die Lastaufnahmeeinheit 11 ist in der gezeigten Ausführung zum Unterfahren eines Ladungsträgers wie einer Palette (nicht gezeigt) ausgebildet. Die Lastaufnahmeeinheit 11 weist eine ebene, horizontale Oberseite 12a auf, von deren Längskanten Flansche 12b vertikal nach unten erstreckt sind. Im Vertikalschnitt sind die Längsabschnitte 13 und der Querabschnitt 14 daher jeweils im Wesentlichen U-förmig ausgebildet, so dass die Lastaufnahmeeinheit 11 haubenförmig auf das Fahrwerk 2 aufgesetzt ist. In der gezeigten Ausführung besteht die Lastaufnahmeeinheit 11 aus genau zwei Längsabschnitten 13, welche entlang der Fahrwerkeinheiten 3 erstreckt sind. Die Längsabschnitte 13 sind über einen im Wesentlichen senkrecht dazu verlaufenden Querabschnitt 14 miteinander verbunden. Dadurch wird eine in Draufsicht U-förmige Lastaufnahmeeinheit 11 erhalten. In einer alternativen Ausführungsform erstreckt sich der Querabschnitt 14 im Wesentlichen über die gesamte Länge der Fahrwerkeinheiten 3, so dass die Lastaufnahmeeinheit 11 in Draufsicht im Wesentlichen rechteckig ist (nicht gezeigt).

Weiters ist zwischen dem Fahrwerk 2 und der Lastaufnahmeeinheit 11 eine Hubeinheit 15 angeordnet, welche dazu eingerichtet ist, die Lastaufnahmeeinheit 11 relativ zu dem Fahrwerk 3 in Richtung der Vertikalachse 10 in eine angehobene Transportstellung nach oben zu verlagern. Je nach Ausführung kann die Hubeinheit 15 zudem dazu eingerichtet sein, die Lastaufnahmeeinheit 11 von der angehobenen Transportstellung in die abgesenkte Stellung zum Unterfahren des Ladungsträgers aktiv abzusenken. Die Hubeinheit 15 weist in der gezeigten Ausführung an jedem Längsabschnitt 13 der Lastaufnahmeeinheit 11 zwei Hubelemente 16 in Form von hydraulischen Zylinder-Kolben-Antrieben auf. Die Hubelemente 16 sind in Längsrichtung der Fahrwerkeinheiten 3 voneinander beabstandet und bevorzugt unabhängig voneinander betätigbar.

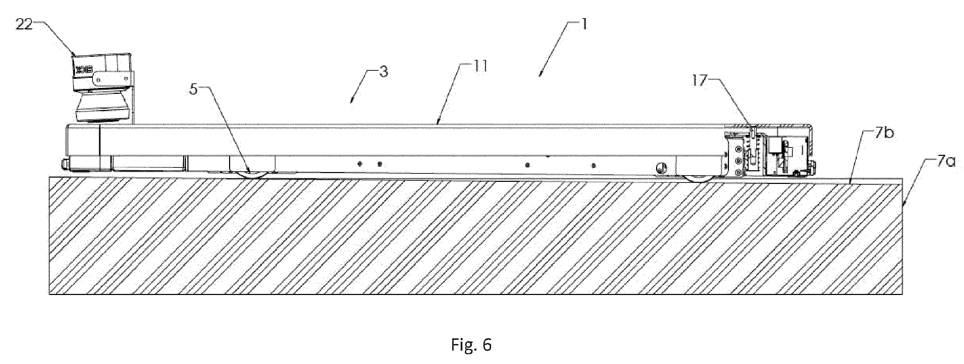

Wie aus der Zeichnung weiters ersichtlich, sind Lagereinrichtungen 17 zwischen den Fahrwerkeinheiten 3 und der Lastaufnahmeeinheit 11 angeordnet. Die Lagereinrichtungen 17 ermöglichen einen Ausgleich einer Bodenunebenheit 7b (vgl. Fig. 6) in dem Untergrund 7a derart, dass die Oberseite 12a der Lastaufnahmeeinheit 11 beim Überfahren der Bodenunebenheiten 7b in einer im Wesentlichen horizontalen Stellung gehalten werden kann. Als Bodenunebenheit 7b ist in der gezeigten Ausführung eine nach vorne hin abfallende Spurrille im Bereich einer der Fahrwerkeinheiten 3 vorgesehen. Darüber hinaus kann eine Verwindung des Fahrwerks 2 vermieden werden. Demnach sind die Fahrwerkeinheiten 3 mittels der Lagereinrichtungen 17 jeweils relativ zu der Lastaufnahmeeinheit 11 beweglich.

In der gezeigten Ausführungsform ermöglichen die Lagereinrichtungen 17 zwischen den Fahrwerkeinheiten 3 und der Lastaufnahmeeinheit 11 eine Verkippung der Fahrwerkeinheiten 3 unabhängig voneinander um die Längs- 8 und um die Querachsen 9 relativ zu der Lastaufnahmeeinheit 11. In der gezeigten Ausführung können die zuvor erwähnten Ausgleichsbewegungen der Fahrwerkeinheiten 3 einander überlagert sein, d.h. gleichzeitig stattfinden. Dadurch ist die Lastaufnahmeeinheit 11 schwimmend auf den Fahrwerkeinheiten 3 gelagert. Die Lagereinrichtungen 17 sind in der gezeigten Ausführung von den Hubelementen 16 verschieden.

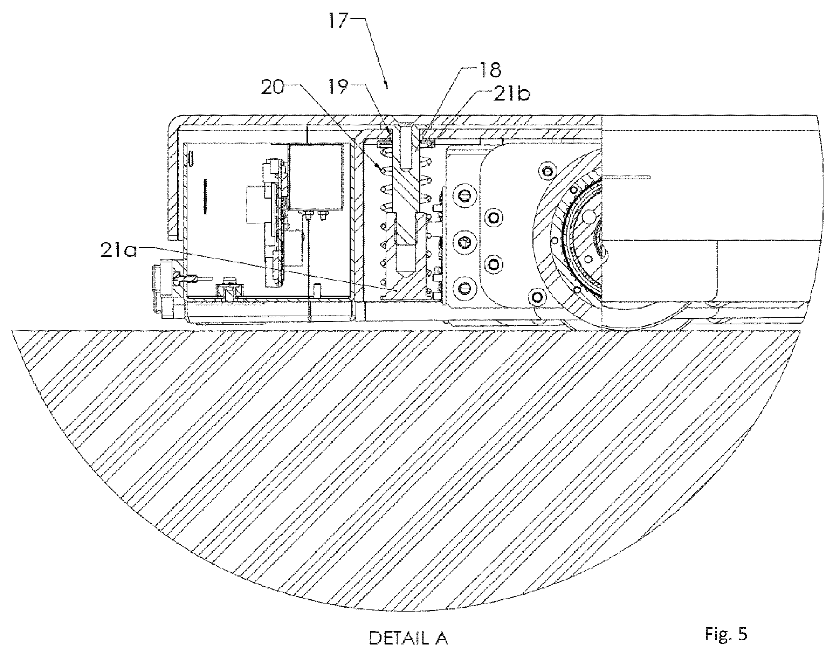

Wie insbesondere aus Fig. 5 ersichtlich, weisen die Lagereinrichtungen 17 jeweils ein in alle Richtungen verkippbar an der Fahrwerkeinheit 3 gelagertes Lagerelement 18 auf, welches in der gezeigten Ausführung durch einen länglichen Lagerzapfen gebildet ist. Das Lagerelement 18 ist durch eine Lageröffnung 19 des Fahrwerkgehäuses 4 gesteckt, wobei das Lagerelement 18 mit einem allseitigen Spiel in der Lageröffnung 19 aufgenommen ist. In der gezeigten Ausführung ist das Lagerelement 18 mit einem Federelement 20 verbunden, welches in der gezeigten Ausführung als Schraubenfeder ausgeführt ist. Das Federelement 20 ist derart zwischen einer unbeweglich mit dem Lagerelement 18 verbundenen Lagerstelle 21a und einer dazu längsverschieblichen Lagerstelle 21b an der Innenseite des Fahrwerkgehäuses 4 angeordnet, dass die Lastaufnahmeeinheit 11 in Richtung der abgesenkten Ausgangsstellung zum Fahrwerkeinheit 3 hin gedrückt wird. Das andere Ende des Lagerelements 18 ist an Befestigungsstellen 21c fest mit der Lastaufnahmeeinheit 11 verbunden, insbesondere verschraubt.

Wie aus Fig. 3 ersichtlich, sind jeweils vier Lagereinrichtungen 17 zwischen jeder Fahrwerkeinheit 3 und jedem Längsabschnitt der Lastaufnahmeeinheit 11 vorgesehen. Die Lagereinrichtungen 17 sind hierbei paarweise an den gegenüberliegenden Enden der Fahrwerkeinheiten 3 angeordnet.

Wie aus der Zeichnung weiters ersichtlich, ist eine Sicherheitseinrichtung 22 zur Erfassung eines Hindernisses entlang eines Fahrwegs des fahrerlosen Transportfahrzeugs 1 vorgesehen ist. Die Sicherheitseinrichtung 22 ist an dem Querabschnitt 14 der Lastaufnahmeeinheit 11 angeordnet.

Das Transportfahrzeug 1 weist selbstverständlich noch zahlreiche weitere Komponenten, beispielsweise eine Steuereinheit, eine Kommunikationseinheit zur Kommunikation mit einer zentralen Steuerung auf, welche für einen fahrerlosen, d.h. autonomen, Fahrbetrieb erforderlich sind, jedoch gemäß Stand der Technik ausgebildet sein können.

Insbesondere weist das fahrerlose Transportfahrzeug 1 eine Steuereinheit (nicht gezeigt) auf, mit welcher zumindest die Antriebe und die Hubeinheit 15 angesteuert werden. Die Steuereinheit kann mit einer zentralen, stationären Steuerstation verbunden sein, mit welcher eine Mehrzahl von fahrerlosen Transportfahrzeugen 1 koordiniert und überwacht werden kann. Bevorzugt ist die Steuereinheit am fahrerlosen Transportfahrzeug darauf ausgelegt, eine Arbeitsaufgabe selbständig zu bewältigen. Darüber hinaus kann die Steuereinheit mit einer übergeordneten Steuerung, insbesondere in der zentralen Steuerstation, verbunden sein, um Steuersignale, insbesondere für die Antriebe und die Hubeinheit 15 zu erhalten. Zu diesem Zweck kann das fahrerlose Transportfahrzeug 1 über eine drahtlose Verbindung, beispielsweise WLAN, mit der zentralen Steuerstation verbunden sein.

## Patentansprüche

1. Fahrerloses Transportfahrzeug (1) zum Fördern eines Ladungsträgers mit
- einem Fahrwerk (2);
- einer mit dem Fahrwerk (2) verbundenen Lastaufnahmeeinheit (11) ;
- einer Hubeinheit (15) zum Anheben der Lastaufnahmeeinheit (11) relativ zu dem Fahrwerk (11),
**dadurch gekennzeichnet, dass**
- das Fahrwerk (2) zwei einzelne Fahrwerkeinheiten (3) mit jeweils zumindest einer Radeinheit (4) aufweist, wobei die Fahrwerkeinheiten (3) über die Lastaufnahmeeinheit (11) miteinander verbunden sind.

2. Fahrerloses Transportfahrzeug (1) nach Anspruch 1, **dadurch gekennzeichnet, dass** Lagereinrichtungen (17) zwischen den Fahrwerkeinheiten (3) und der Lastaufnahmeeinheit (11) derart angeordnet sind, dass die Fahrwerkeinheiten (3) jeweils relativ zu der Lastaufnahmeeinheit (11) beweglich sind.

3. Fahrerloses Transportfahrzeug (1) nach Anspruch 2, **dadurch gekennzeichnet, dass** die Lagereinrichtungen (17) zwischen den Fahrwerkeinheiten (3) und der Lastaufnahmeeinheit (11) derart angeordnet sind, dass die Fahrwerkeinheiten (3) jeweils um im Wesentlichen in Längsrichtung der Fahrwerkeinheiten verlaufende Längsachsen (8) relativ zu der Lastaufnahmeeinheit (11) verkippbar sind.

4. Fahrerloses Transportfahrzeug (1) nach Anspruch 2 oder 3, **dadurch gekennzeichnet, dass** die Lagereinrichtungen (17) zwischen den Fahrwerkeinheiten (3) und der Lastaufnahmeeinheit (11) derart angeordnet sind, dass die Fahrwerkeinheiten (3) jeweils um im Wesentlichen senkrecht zu den Längsachsen (8) verlaufende Querachsen (9) der Fahrwerkeinheiten (3) relativ zu der Lastaufnahmeeinheit (11) verkippbar sind.

5. Fahrerloses Transportfahrzeug (1) nach einem der Ansprüche 2 bis 4, **dadurch gekennzeichnet, dass** die Lagereinrichtungen (17) zwischen den Fahrwerkeinheiten (3) und der Lastaufnahmeeinheit (11) derart angeordnet sind, dass die Fahrwerkeinheiten (3) jeweils gleichzeitig um die Längsachsen (8) und die Querachsen (9) relativ zu der Lastaufnahmeeinheit (11) verkippbar sind.

6. Fahrerloses Transportfahrzeug (1) nach einem der Ansprüche 1 bis 5, **dadurch gekennzeichnet, dass** die Lagereinrichtung (17) ein in zumindest zwei Richtungen, vorzugsweise in alle Richtungen, verkippbar an der Fahrwerkeinheit (3) oder an der Lastaufnahmeeinheit (11) gelagertes Lagerelement (18) aufweist.

7. Fahrerloses Transportfahrzeug (1) nach Anspruch 6, **dadurch gekennzeichnet, dass** die Fahrwerkeinheit (3) oder die Lastaufnahmeeinheit (11) eine Lageröffnung (19) aufweist, in welcher das Lagerelement (18) mit einem allseitigen Spiel aufgenommen ist.

8. Fahrerloses Transportfahrzeug (1) nach Anspruch 6 oder 7, **dadurch gekennzeichnet, dass** das Lagerelement (18) mit einem Federelement (20) verbunden ist, welches die Lastaufnahmeeinheit (11) in Richtung zur Fahrwerkeinheit (3) hin vorspannt.

9. Fahrerloses Transportfahrzeug (1) nach einem der Ansprüche 6 bis 8, **dadurch gekennzeichnet, dass** jeweils zumindest zwei Lagereinrichtungen (17) zwischen jeder Fahrwerkeinheit (3) und der Lastaufnahmeeinheit (11) vorgesehen sind, wobei die einen Lagereinrichtungen (11) vorzugsweise an den einen Enden der Fahrwerkeinheiten (3) und die anderen Lagereinrichtungen (17) vorzugsweise an den anderen Enden der Fahrwerkeinheiten (3) angeordnet sind.

10. Fahrerloses Transportfahrzeug nach einem der Ansprüche 1 bis 9, **dadurch gekennzeichnet, dass** die Lastaufnahmeeinheit (11) entlang der Fahrwerkeinheiten (3) erstreckte Längsabschnitte (13) und einen die Längsabschnitte (13) miteinander verbindenden Querabschnitt (14) aufweist.

11. Fahrerloses Transportfahrzeug (1) nach einem der Ansprüche 1 bis 10, **dadurch gekennzeichnet, dass** die Hubeinheit (15) jeweils zumindest ein Hubelement (16), insbesondere einen Linearantrieb, vorzugsweise einen hydraulischen Zylinder-Kolben-Antrieb, zwischen jeder Fahrwerkseinheit (3) und der Lastaufnahmeeinheit (11) aufweist, wobei vorzugsweise jeweils zumindest zwei in Richtung der Längsachsen (8) der Fahrwerkeinheiten (3) voneinander beabstandete Hubelemente (16) pro Fahrwerkeinheit (3) vorgesehen sind.

12. Fahrerloses Transportfahrzeug (1) nach Anspruch 11, **dadurch gekennzeichnet, dass** die Hubelemente (16) der Hubeinheit (15) unabhängig voneinander betätigbar sind, so dass die einzelnen Fahrwerkeinheiten (3) in unterschiedlichen Höhenpositionen relativ zu der Lastaufnahmeeinheit (11) anordenbar sind.

13. Fahrerloses Transportfahrzeug (1) nach einem der Ansprüche 1 bis 12, **dadurch gekennzeichnet, dass** eine Sicherheitseinrichtung (22) zur Erfassung eines Hindernisses entlang eines Fahrwegs des fahrerlosen Transportfahrzeugs (1) vorgesehen ist.

14. Fahrerloses Transportfahrzeug (1) nach Anspruch 13, **dadurch gekennzeichnet, dass** die Sicherheitseinrichtung (22) an dem Querabschnitt (14) der Lastaufnahmeeinheit (11) angeordnet ist.

15. Fahrerloses Transportfahrzeug (1) nach einem der Ansprüche 1 bis 14, **dadurch gekennzeichnet, dass** die Radeinheiten (5) jeweils zwei Bodenrollen (6a) aufweisen, wobei die Radeinheiten (5) jeweils um eine im Wesentlichen senkrecht zur Hauptebene der Fahrwerkeinheit (3) verlaufende Drehachse drehbar ist.
